# FASCICULE DE BREVET EUROPEEN

(11) **EP 1 323 558 B1**
(45) Date de publication et mention de la délivrance du brevet: **22.11.2006**
(21) Numéro de dépôt: 02364047.7
(22) Date de dépôt: 10.12.2002
(51) Int. Cl.: B60J 1/16

(54) **Dispositif motorisé d'obturation d'une baie ménagée dans un véhicule automobile, et véhicule correspondant**
Motorisch betriebene Schliesseinrichtung einer Öffnung in einem Fahrzeug und zugehöriges Fahrzeug
Powered closing unit of an opening of a vehicle and corresponding vehicle

(30) Priorité: 10.12.2001 FR 0115951
(43) Date de publication de la demande: 02.07.2003
(73) Titulaire: WAGON SAS, 79300 Bressuire (FR)
(72) Inventeur: Maltaverne, Guy, 79300 Bressuire (FR)
(74) Mandataire: Vidon, Patrice

(56) Documents cités:
- EP-A- 0 962 346
- US-A- 5 531 046
- US-A- 5 724 769
- US-A- 5 822 922
- PATENT ABSTRACTS OF JAPAN vol. 1998, no. 13, 30 novembre 1998 (1998-11-30) -& JP 10 211817 A (NISSAN SHATAI CO LTD), 11 août 1998 (1998-08-11)
- PATENT ABSTRACTS OF JAPAN vol. 1997, no. 05, 30 mai 1997 (1997-05-30) -& JP 09 002062 A (AICHI MACH IND CO LTD), 7 janvier 1997 (1997-01-07)
- PATENT ABSTRACTS OF JAPAN vol. 2000, no. 05, 14 septembre 2000 (2000-09-14) -& JP 2000 043565 A (AICHI MACH IND CO LTD), 15 février 2000 (2000-02-15)

## Description

Le domaine de l'invention est celui des baies de véhicules automobiles. Plus précisément, l'invention concerne les dispositifs d'obturation d'une baie ménagée dans la carrosserie d'un véhicule, et comprenant une partie mobile coulissante, susceptible de libérer ou de fermer une ouverture.

Classiquement, pour obturer la baie d'un véhicule, qu'il s'agisse d'une automobile, d'un véhicule utilitaire, d'un camion, d'un autobus ou d'un wagon de chemin de fer, on rapporte une vitre, maintenue par un cadre de liaison. Ce dernier présente une partie interne et une partie externe, qui viennent pincer simultanément les bords de la glace et de l'ouverture ménagée dans la carrosserie, avec une garniture d'étanchéité.

La technique la plus couramment répandue pour l'ouverture et la fermeture des vitres est de rendre celle-ci mobile verticalement dans son propre plan, en la faisant pénétrer ou sortir du caisson ou de la garniture des portières latérales.

Cette technique est aujourd'hui couramment utilisée et des solutions pour l'automatiser sont connues. L'équipement des automobiles en vitres électriques est aujourd'hui très répandu.

Cette technique présente cependant de nombreux inconvénients. Les moyens d'actionnement et d'entraînement sont lourds, encombrants et complexes à monter. Les portes qui en résultent présentent en conséquence un volume important, nuisant au volume disponible à l'intérieur du véhicule (largeur aux coudes notamment).

Elles ont de plus un coût de fabrication élevé et posent classiquement des problèmes d'étanchéité. La maintenance est également complexe. Elles imposent en outre des contraintes sur le plan de l'esthétique et de l'ergonomie.

Une autre technique a été proposée par le titulaire de la présente demande de brevet. Cette technique est notamment décrite dans les documents de brevet EP - 0 778 168 et EP - 0 857 844. Le dispositif d'obturation (appelé par la suite "baie flush") présenté dans ces documents comprend un ensemble fixe et une partie mobile par rapport à cet ensemble fixe. La partie mobile est reliée à l'ensemble fixe par des éléments fonctionnels qui assurent la mobilité requise et qui sont rapportés sur la face de la partie fixe tournée vers l'intérieur du véhicule.

Une telle baie flush peut être montée intégralement indépendamment du véhicule, et rapportée, depuis l'extérieur, dans le logement défini à cet effet sur la carrosserie du véhicule. Elle peut également être solidarisée, en particulier par collage à la partie inférieure d'une portière, selon la technique décrite dans le document de brevet EP 1 022 172. On résout ainsi la plupart des problèmes identifiés plus haut.

Sur le plan esthétique, la baie flush présente, vue de l'extérieur, un aspect lisse, affleurant, du fait qu'aucun cadre n'est nécessaire.

Le mouvement de la partie mobile peut être, par exemple, basculant ou coulissant. On décrit ci-après, rapidement, un exemple de ce dernier cas.

Pour assurer un coulissement de la partie mobile, constitué généralement par un panneau transparent, les moyens fonctionnels comprennent un dispositif de guidage comportant un premier et un second rails de guidage montés fixes sur l'ensemble fixe de la baie, de part et d'autre de l'ouverture fermée par le panneau mobile. Celui-ci est monté sur les rails, pour coulisser selon une direction longitudinale, dans un plan de coulissement entre une (ou plusieurs) position d'ouverture et une position intermédiaire de dégagement dans laquelle il est en regard de la baie et dégagé de celle-ci.

Des moyens d'articulation assurent la liaison du panneau avec les rails de guidage de façon à permettre un déplacement transversal du panneau entre sa position intermédiaire de dégagement dans laquelle il est en regard et en retrait transversal de la baie, et sa position d'obturation dans laquelle il est enchâssé dans la baie.

Le panneau mobile passe ainsi du plan formé par l'ensemble fixe (position d'obturation) à un plan sensiblement parallèle de coulissement, et réciproquement.

L'invention se rapporte notamment à ce type de dispositif d'obturation, à ses variantes et ses perfectionnements. Ainsi, l'invention peut s'appliquer à tous les dispositifs d'obturation dont la cinématique d'ouverture et/ou de fermeture inclut un déplacement (y) entre une position d'ouverture et une position intermédiaire de dégagement, dans un plan parallèle au plan de l'ensemble fixe, et un déplacement (x) dans ce plan parallèle.

Cette clé de composition de mouvements de déplacement longitudinal et d'enchâssement transversal est particulièrement avantageuse, car elle permet une ouverture du panneau le long du véhicule (par exemple parallèlement au flanc de celui-ci) tout en assurant à la fermeture, un enchâssement du panneau dans la baie.

Dans le mode de réalisation décrit dans le brevet EP - 0 857 844, le panneau est manoeuvré à l'aide d'une poignée pouvant être fixée sur la partie inférieure du panneau. Plusieurs techniques ont été proposées pour réaliser et mettre en oeuvre cette poignée. Cependant, en général, les manoeuvres d'ouverture et de fermeture de ce type de dispositif d'obturation s'effectuent actuellement de façon manuelle.

L'automatisation, et donc la motorisation, des baies flush est bien sûr souhaitable, sinon nécessaire, pour équiper des véhicules modernes. Le principe de la motorisation a donc été envisagé. Cependant, aucune solution efficace n'a pour l'instant été proposée.

Une des raisons techniques à ce problème est que l'automatisation de la succession de déplacements (mouvement en x, puis en y) est beaucoup plus complexe que la mise en oeuvre d'un mouvement dans un seul plan, tel que cela est le cas lorsque la vitre pénètre dans la portière.

On est donc conduit à prévoir des moyens spécifiques pour effectuer chacun des mouvements en x et en y, ce qui conduit à des montages complexes, coûteux et encombrants, et donc inadaptés.

Le problème de l'encombrement (et du poids) est essentiel, dans le cas des baies flush : on ne peut pas dissimuler tout ou partie des moyens d'actionnement dans le caisson inférieur de la portière, que l'on souhaite conserver fermé. L'essentiel de la surface de la baie est donc visible, et il n'est pas envisageable que des moyens mécaniques (moteur, tringlerie, ...) soient apparents et/ou occupent une surface et un volume importants.

Par ailleurs, les baies doivent rester aisées à fabriquer, à livrer et à monter, ce qui est généralement peu compatible avec la notion d'automatisation.

On notera qu'il a été envisagé de combiner les deux mouvements, sous la forme d'un mouvement louvoyant, selon lequel le bord distal de la parie mobile se trouve, en fin de course, dans le plan de la baie (la partie mobile étant alors « en travers », entre le plan d'obturation et le plan de coulissement). Il suffit alors de ramener, manuellement, le bord proximal pour assurer l'obturation.

On n'obtient cependant pas une obturation complètement automatisée, à moins de prévoir des moyens complémentaires, ce qui ramène aux problèmes cités plus hauts.

L'invention ne vise cependant pas ce type de dispositifs à mouvement louvoyant, qui posent de nombreux problèmes, notamment en termes d'étanchéité et d'esthétique, du fait que le jeu entre le panneau mobile et l'ouverture dans l'ensemble fixe doit être important à l'arrière.

L'invention concerne donc les dispositifs dans lesquels la cinématique est décomposée en deux mouvements (en x puis en y), le panneau mobile restant en permanence sensiblement parallèle « à lui-même », ou, plus exactement, au plan défini par la baie. En d'autres termes, le panneau mobile passe dans une pluralité de plans, tous sensiblement parallèles.

Le terme « sensiblement » signifie qu'il peut y avoir des jeux, des décalages ou des déplacements qui ne sont pas parfaitement rectilignes, du fait de la structure et de la forme de la baie et du véhicule, des matériaux, des tolérances, de l'usure, ... Il n'englobe pas en revanche le cas d'un panneau « en travers » dans un dispositif louvoyant.

On notera par ailleurs que le terme « plan » doit ici s'entendre dans une acception élargie : le plan formé par la baie est généralement courbe, selon une, voire deux, directions (cela peut justifier également, dans certains cas, le terme « sensiblement »).

L'invention a donc notamment pour objectif de pallier les inconvénients de l'art antérieur cités ci-dessus.

Plus précisément, l'invention a pour objectif de proposer un dispositif d'obturation d'une baie intégrant un panneau mobile, restant en permanence sensiblement parallèle au plan formé par la baie, et dont la manoeuvre est automatisée.

L'invention a également pour objectif de fournir un tel dispositif d'obturation d'une baie qui assure un enchâssement complet et simultané du panneau dans la baie lors d'une manoeuvre de fermeture.

L'invention a encore pour objectif de fournir un tel dispositif d'obturation d'une baie qui soit simple à réaliser, à monter sur une portière ou sur un véhicule, et qui permette une utilisation aisée et fiable.

Un autre objectif de l'invention est de fournir un tel dispositif d'obturation d'une baie qui conserve l'ensemble des avantages des "baies flush" déjà développées par le titulaire de la présente demande, et notamment :
- aspect esthétique affleurant ;
- aspects aérodynamiques ;
- facilité et coût réduit de fabrication ;
- facilité et coût réduit de montage.

Ces objectifs, ainsi que d'autres qui apparaîtront par la suite, sont atteints à l'aide d'un dispositif d'obturation d'une baie ménagée dans la carrosserie d'un véhicule automobile, comprenant un ensemble fixe destiné à être rapporté sur ladite carrosserie et une partie mobile par rapport audit ensemble fixe, monté sur au moins un élément de support et/ou de guidage solidaire de la face dudit ensemble fixe dirigée vers l'intérieur dudit véhicule, et pouvant venir obturer ou libérer une ouverture ménagée dans ledit ensemble fixe. Selon l'invention, le dispositif comprend des moyens de motorisation uniques agissant sur au moins un élément coulissant le long d'un desdits éléments de support et/ou de guidage et présentant une articulation, de façon à assurer une cinématique dudit panneau mobile par rapport audit ensemble fixe décomposée en deux déplacements perpendiculaires :
- un déplacement (y) de verrouillage/déverrouillage, sensiblement perpendiculaire au plan formé par ledit ensemble fixe, et permettant le passage d'une position d'obturation dans le plan formé par ledit ensemble fixe à une position d'ouverture, dans un plan d'ouverture, sensiblement parallèle audit plan formé par ledit ensemble fixe, et réciproquement, ledit déplacement (y) de verrouillage/déverrouillage étant obtenu en agissant sur la ou lesdites articulations ;
- un déplacement (x) de coulissement dans ledit plan d'ouverture, obtenu en entraînant le ou lesdits éléments coulissants.

Ainsi, on décompose la cinématique en deux mouvements perpendiculaires, ou quasi-perpendiculaires, sans louvoiement ni phase transitoire, à l'aide d'un unique moteur, de façon simple et efficace.

De façon avantageuse, lesdits moyens de motorisation agissent sur des moyens d'entraînement assurant ledit déplacement de coulissement, jusqu'à une butée interrompant ce coulissement, lors de l'obturation de ladite ouverture, lorsque ledit panneau fixe se trouve en regard de ladite ouverture, l'énergie appliquée auxdits moyens d'entraînement étant alors transférée à la ou auxdites articulations pour ramener ledit panneau mobile en position d'obturation.

Selon un premier mode de réalisation, ledit élément coulissant comprend avantageusement un premier profilé solidaire dudit panneau mobile et un second profilé solidaire dudit rail, reliés au niveau de ladite articulation, lesdits premier et second profilés étant sélectivement solidarisés ou désolidarisés en translation, de façon à interrompre le déplacement en translation dudit premier profilé, lors de l'obturation de ladite ouverture, lorsque le panneau mobile se trouve en regard de ladite ouverture, ledit second profilé continuant son déplacement en translation sur une portion supplémentaire dudit rail.

Ladite portion supplémentaire dudit rail peut avantageusement porter une came ou une rampe, entraînant une rotation dudit second profilé, de façon à agir sur ladite articulation pour ramener ledit panneau mobile dans ladite position d'obturation.

Préférentiellement, ledit premier profilé est arrêté en translation à l'aide d'une butée agissant sur ledit premier profilé et/ou sur ledit panneau mobile.

De façon avantageuse, ledit panneau mobile se place dans ledit plan d'ouverture sous l'effet de son propre poids, lorsqu'il n'est pas maintenu en position d'obturation.

Selon un deuxième mode de réalisation, lesdits moyens de motorisation uniques transmettent un couple à ladite articulation lorsque ledit panneau est en regard de ladite baie, pour ramener ledit panneau mobile dans ladite position d'obturation.

Dans ce cas, lesdits moyens de motorisation agissent préférentiellement sur un système vis sans fin/écrou, ledit écrou étant formé sur et/ou solidaire d'au moins un élément solidaire dudit panneau mobile, ledit déplacement de coulissement correspondant à un déplacement dudit écrou sur ladite vis, et ledit déplacement de verrouillage/déverrouillage correspondant à une position bloquée dudit écrou sur ladite vis.

Selon un troisième mode de réalisation selon lequel le dispositif d'obturation comprend deux éléments de support et/ou de guidage, lesdits moyens de motorisation agissent avantageusement sur l'élément de support et/ou de guidage inférieur, l'élément de support et/ou de guidage supérieur étant passif.

Selon une approche avantageuse, le dispositif peut comprendre un unique élément de support et/ou de guidage. Cette approche est bien adaptée notamment à une nouvelle structure, selon laquelle ledit panneau mobile présente au moins un bord et/ou un angle commun avec un bord et/ou un angle dudit dispositif d'obturation.

Selon une caractéristique particulière (notamment bien adaptée aux mécanismes à rail unique), le dispositif d'obturation comprend avantageusement des moyens de maintien de façon stable dudit panneau mobile, dans une position d'ouverture prédéterminée.

Lesdits moyens de maintien peuvent notamment plaquer ledit panneau mobile contre ledit ensemble fixe. De façon avantageuse, lesdits moyens de maintien sont formés et/ou actionnés par lesdits moyens de motorisation.

Selon un mode de réalisation préférentiel, lesdits moyens de maintien agissent de façon à interrompre le coulissement dudit panneau mobile et à inverser le sens de rotation desdits moyens de motorisation.

De façon avantageuse, au moins une partie des bords de ladite partie mobile est équipée d'un joint, assurant l'étanchéité dans ladite position d'obturation et formant amortisseur dans ladite position d'ouverture prédéterminée.

Selon plusieurs techniques avantageuses, lesdits moyens de motorisation agissent sur l'un des moyens de transmission appartenant au groupe comprenant :
- les crémaillères ;
- les câbles ;
- les vis sans fin ;
- les tambours à rainure hélicoïdale,
et leurs combinaisons.

Dans le cas où on met en oeuvre une vis sans fin, cette dernière est avantageusement une vis souple, notamment lors que le dispositif d'obturation n'est pas plat.

Préférentiellement, lesdits moyens de motorisation uniques sont solidarisés audit ensemble fixe. De façon avantageuse, ils sont montés dans et/ou sur un desdits éléments de support et/ou de guidage.

Selon une autre caractéristique, ladite baie est ménagée dans un panneau vitré.

L'invention concerne également les véhicules automobiles comprenant au moins un dispositif d'obturation tel que décrit ci-dessus.

D'autres caractéristiques et avantages de l'invention apparaîtront plus clairement à la lecture de la description suivante de plusieurs modes de réalisation préférentiels de l'invention, donnés à titre d'exemples illustratifs et non limitatifs, et des dessins parmi lesquels :
- la figure 1présente un exemple de baie flush à panneau coulissant, d'un type connu en soi ,
- la figure 2 illustre les articulations, ou genouillères, mises en oeuvre dans le dispositif de la figure 1 ;
- la figure 3 présente, de façon schématique, un premier mode de réalisation de l'invention, selon lequel le panneau mobile est entraîné par une vis sans fin, en translation puis en rotation ;
- la figure 4 illustre un autre mode de réalisation de l'invention, mettant toujours en oeuvre une vis sans fin, et dans lequel les éléments de la genouillère sont désolidarisables ;
- la figure 5 présente une autre structure de dispositif d'obturation , dans lequel le panneau mobile est réalisé dans un angle ;
- les figures 6A et 6B illustrent schématiquement le mécanisme d'entraînement du panneau mobile de la figure 5, mettant en oeuvre un rail unique ;
- la figure 7 est une coupe AA de la figure 5, montrant le joint d'étanchéité ;
- les figures 8A et 8B présentent le fonctionnement motorisé du dispositif de la figure 5.

Comme déjà indiqué, le principe général de l'invention repose notamment sur l'utilisation de moyens de motorisation uniques assurant d'une part le coulissement (ou, dans un mode de réalisation particulier, la rotation) de la partie mobile, dans un plan d'ouverture, et d'autre part le passage du plan d'ouverture au plan d'obturation. L'invention propose donc de mettre en oeuvre sélectivement des mouvements dans deux directions perpendiculaires (ou quasi-perpendiculaires), avec une motorisation unique, et des moyens d'actionnement très simples.

On décrit ci-après quatre exemples de mise en oeuvre, résidant tous sur le même principe : des moyens spécifiques (cale, butée, blocage d'écrou, ...) sont utilisés pour changer le mouvement de la partie mobile, sans action spécifique sur les moyens d'entraînement, qui tournent en permanence de la même façon.

### 1. dispositif à panneau coulissant monté sur des organes d'articulation

### 1.1. rappel sur le principe mécanique

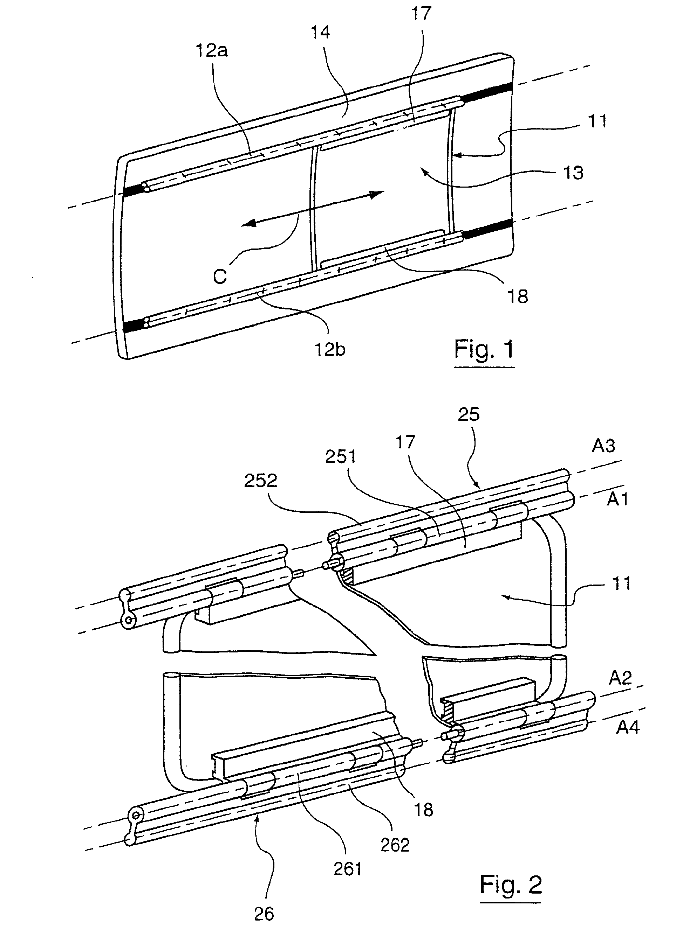

Selon ce mode de réalisation, on motorise une baie telle que décrite dans le document de brevet déjà cité EP-0 778 168. On rappelle tout d'abord le principe correspondant, à l'aide des figures 1 et 2.

Le dispositif d'obturation d'une baie de la figure 1 comprend un panneau 11 coulissant, mobile le long de rails de guidage 12a, 12b, entre des positions d'obturation et d'ouverture d'une ouverture 13 ménagée dans un élément fixe 14 destiné à être rapporté sur la carrosserie d'un véhicule, pour obturer une baie ménagée sur celle-ci.

Comme illustré par la figure 2, le panneau 11 est relié aux rails de guidage par l'intermédiaire d'organes d'articulation 25 et 26.

Ces organes d'articulation 25 et 26 permettent d'assurer le déplacement du panneau 11 d'une position où il est engagé dans la baie (position d'obturation) vers une position intermédiaire de dégagement (position d'ouverture) où il est en regard de la baie et légèrement en retrait de celle-ci, et inversement.

Chaque organe d'articulation 25, 26 est formé de deux éléments, par exemple des profilés, solidarisés par un axe A1, A2 formant articulation. Le premier élément 251, 261 est solidaire de la partie fixe. Plus précisément, le second élément est monté dans un des rails 12a, 12b respectivement, dans lequel il peut coulisser.

En agissant sur un des organes d'articulation 25, 26 au niveau de l'articulation (de façon à ouvrir l'angle formé par chacun des éléments), on déplace la partie mobile 11 perpendiculairement au plan défini par l'ensemble fixe 14. On réalise ainsi l'enchâssement de la partie mobile dans la partie fixe, et donc l'obturation de l'ouverture.

L'obturation est assurée tant que l'action sur l'organe d'articulation est maintenue. Lorsqu'elle est relâchée, le panneau mobile revient de lui-même dans le plan de coulissement ; Il est alors possible de la déplacer le long des rails (flèche C), dans la position souhaitée.

On met donc en oeuvre une cinématique dudit panneau mobile par rapport audit ensemble fixe, décomposée en deux déplacements :
- un déplacement de verrouillage/déverrouillage, sensiblement perpendiculaire au plan formé par l'ensemble fixe 14, et permettant le passage du plan formé par l'ensemble fixe 14 à un plan de coulissement, sensiblement parallèle au plan formé par l'ensemble fixe 14, et réciproquement ;
- un déplacement de coulissement dans le plan de coulissement.

Bien entendu, de nombreuses variantes de réalisation et de nombreux perfectionnements existent ou sont envisageables (ensemble fixe en plusieurs parties, rails non parallèles, joints spécifiques, ...) et peuvent être mis en oeuvre dans le cadre de la présente invention.

### 1.2 mise en oeuvre de l'invention

L'invention propose donc d'assurer la motorisation de ces deux déplacements perpendiculaires à l'aide d'un moyen de motorisation unique. Ce dernier assure donc le coulissement du panneau mobile, dans le plan de coulissement, en entraînant l'élément 262 de l'organe d'articulation.

Lors de la fermeture, des moyens d'arrêt sont prévus pour interrompre le coulissement lorsque le panneau mobile se trouve en face de l'ouverture. L'énergie appliquée par les moyens de motorisation sur l'élément 262 est alors convertie en un couple, qui entraîne la rotation de ce dernier, et par conséquent le déplacement du panneau mobile jusqu'à sa position d'obturation.

Comme déjà mentionné, le retour en position d'ouverture se fait généralement sous le seul effet du poids, lorsque le couple n'est plus appliqué (et/ou que des moyens de verrouillage sont déverrouillés). Des moyens d'entraînement, de guidage et/ou de ralentissement du mouvement peuvent être prévus.

### 1.3. entraînement par vis sans fin

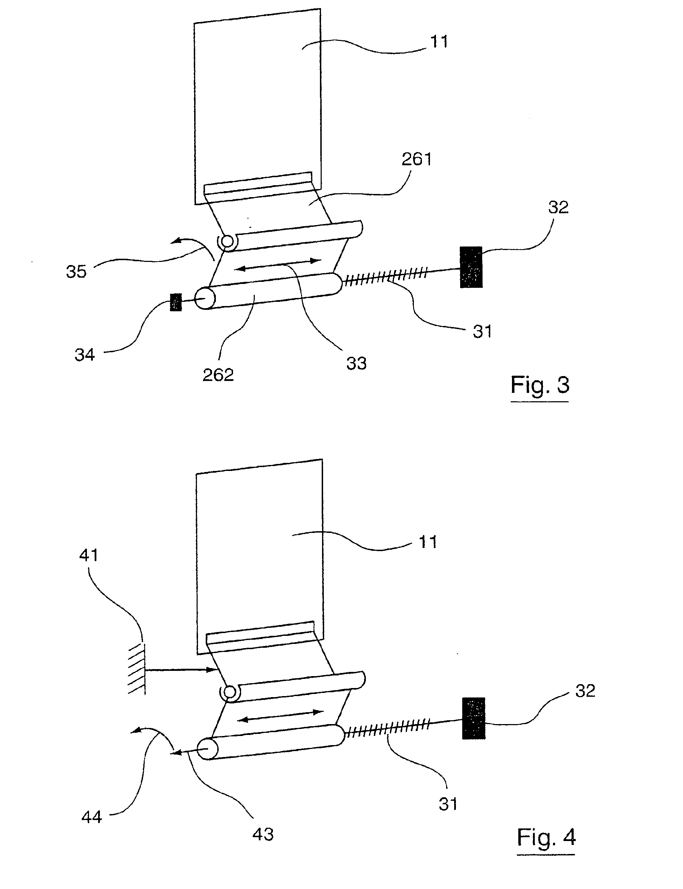

Ainsi que cela est illustré schématiquement en figure 3, l'entraînement peut avantageusement être assuré à l'aide d'une vis sans fin 31, actionnée en rotation par un moteur 32.

L'élément 262 de l'organe d'articulation présente un alésage fileté, coopérant avec la vis sans fin. Ainsi, lorsque le moteur entraîne la vis 31 en rotation (le panneau mobile étant dans le plan de coulissement), l'élément 262 se déplace le long du pas de vis et, par conséquent, le panneau mobile 11 coulisse (33) le long de la partie fixe.

Lors de la fermeture, l'élément 262 se déplace longitudinalement jusqu'à une butée 34, qui correspond à la position en regard de l'ouverture pour le panneau mobile. Cet élément 262 ne peut alors plus progresser le long de la vis 31. Cette dernière continuant à tourner, l'élément 262 est entraîné en rotation (35).

Cette rotation ramène, via l'élément 261, le panneau mobile 11 dans la position d'obturation (c'est-à-dire enchâssé dans l'ensemble fixe).

La butée 34 peut être une cale montée sur le rail, et agissant directement sur l'élément 262. On peut également prévoir des moyens réalisés ou montés sur la vis elle-même, tels qu'un ou plusieurs ergots venant s'inscrire dans des logements correspondants de l'élément 262 (cela permettant par ailleurs de contrôler également l'ouverture du panneau).

Avantageusement, la vis 31 est réalisée dans un matériau souple, notamment lorsque la baie présente une forme galbée.

### 1.4. variantes

Bien entendu, d'autres types d'entraînement peuvent être mis en oeuvre.

Par exemple, la vis sans fin peut être remplacée par un tambour portant une rainure hélicoïdale dans laquelle se déplace un ergot formé dans l'élément 262. L'extrémité de la rainure correspond à la fin du coulissement: le tambour entraîne alors l'ergot, et donc l'élément 262, en rotation, pour assurer la fermeture.

### 1.5. désolidarisation des éléments de l'organe d'articulation

Selon une autre approche, on peut prévoir que les éléments 261 et 262 sont désolidarisables en coulissement. Ils sont donc liés lors du déplacement assurant le coulissement, pour que le déplacement de l'élément 262 entraîne celui du panneau mobile, et désolidarisés en translation lors du déplacement perpendiculaire de fermeture, selon le principe illustré en figure 4.

Une butée 41 est prévue pour arrêter l'élément 261 solidaire du panneau mobile (et/ou le panneau mobile lui-même). Lors de la fermeture, lorsqu'il atteint cette butée 41, l'élément 261 est arrêté, et maintient la partie mobile 11 en regard de l'ouverture. En revanche, l'élément 262 continue son déplacement, sous l'action des moyens de motorisation et, par exemple, de la vis sans fin.

Une came (non représentée), ou un moyen similaire, agit sur cet élément 262, de façon que, simultanément à sa translation 43, il se redresse, par un mouvement de rotation 44 agissant ainsi sur l'articulation et, par conséquent, sur le panneau mobile 11.

Il est à noter que, malgré la présence d'une came, ou d'un plan incliné, agissant progressivement sur l'élément 262 par ailleurs en translation, on obtient bien un mouvement perpendiculaire à l'axe de coulissement pour le panneau mobile, du fait de la désolidarisation en translation des deux éléments 261 et 262 de l'organe d'articulation. La désolidarisation, et la solidarisation, des deux éléments sont assurés par exemple à l'aide d'un ressort de compression.

Selon cette approche, les moyens d'entraînement de l'élément 262 peuvent être variés. Outre ceux déjà exposés, on peut notamment mettre en oeuvre des systèmes à crémaillère, à câble, ...

### 2. Dispositif à rail unique

Dans certains cas, il n'est pas possible, ou pas souhaitable, de prévoir deux rails pour maintenir et/ou guider le panneau mobile. C'est par exemple le cas pour des panneaux mobiles de petite taille, et/ou réalisés dan un angle ou un bord de l'ensemble fixe (le panneau mobile forme, lorsqu'il est fermé, un bord ou un angle de la baie). Cette technique fait l'objet d'une demande de brevet conjointe, ayant pour titre « Dispositif d'obturation d'une baie ménagée dans un véhicule automobile, à rail unique, et véhicule correspondant ».

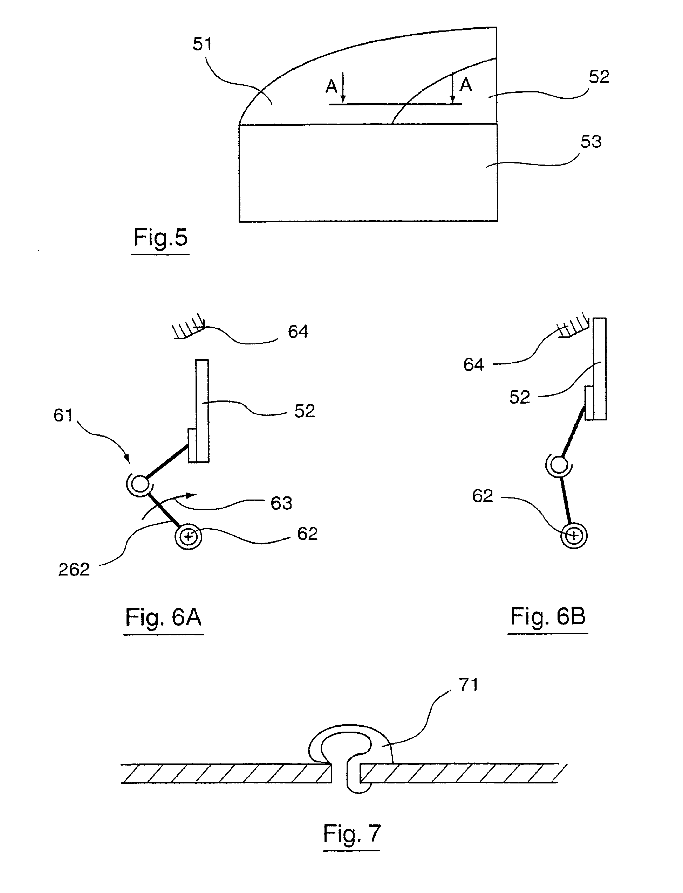

Un exemple d'une telle baie est illustré schématiquement en figure 5. Cette figure 5 présente une portière de véhicule, présentant une vitre fixe 51 et une vitre, ou panneau, mobile 52, coulissant horizontalement. L'ensemble vitre fixe + vitre mobile peut être rapporté, comme un tout, par exemple par collage, sur le caisson de porte 53.

La vitre mobile 52 est montée sur un organe d'articulation, ou genouillère, ainsi que cela est illustré en figures 6A et 6B. La genouillère 61 peut se déplacer en translation, par exemple à l'aide d'une vis sans fin 62.

A la fermeture, selon l'une des techniques décrites préalablement, la rotation 63 imprimée à l'élément 262 (mouvement de genouillère) ramène le panneau mobile 52 vers sa position de fermeture. Un coin 64 monté sur la vitre fixe 51 assure le guidage et le « coincement » du panneau mobile (figure 6B)

Un joint 71, illustré sur la figure 7, qui est une coupe partielle selon l'axe AA (figure 5), assure d'une part l'étanchéité, et d'autre part l'arrêt de la vitre mobile, lorsqu'elle est en position d'obturation.

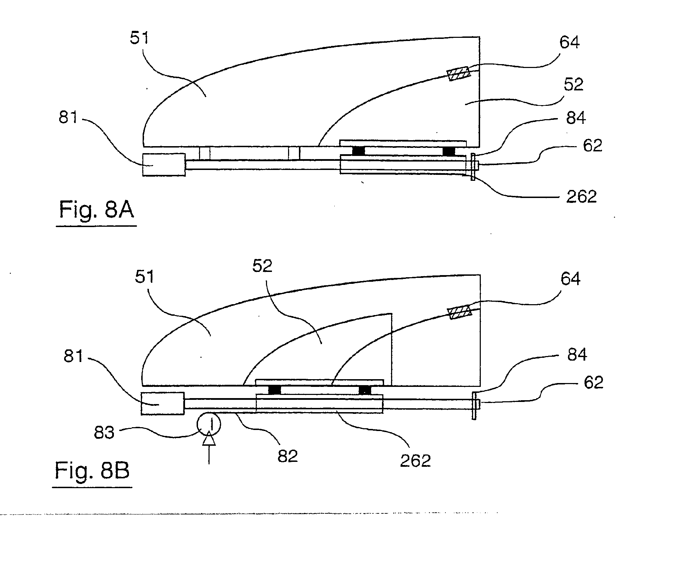

Les figures 8A et 8B présentent le mécanisme d'entraînement, respectivement lorsque la vitre mobile est en position fermée et en position ouverte, selon un mode de réalisation particulier.

Le moteur 81 entraîne une vis sans fin 62, agissant sur la genouillère 61. La butée 84 interrompt la translation de la genouillère, le mouvement de translation se transformant alors en une rotation.

En position ouverte (figure 8B), la vitre mobile 52 est préférentiellement plaquée sur la vitre fixe 51, avec un amortissement par le joint 71. Cela permet d'éviter les vibrations, chocs, détériorations, ...

Ce placage est assuré par une rotation inverse du moteur 81, l'écrou de la genouillère étant arrêté en translation, par exemple à l'aide d'un câble 82 entraîné par une poulie 83 avec ressort, que l'on bloque pour interrompre sa rotation.

Le fonctionnement peut alors être le suivant. La vitre 52 étant fermée, on actionne la rotation du moteur 81 dans le sens horaire. La vitre se décale de son logement, puis se replace en translation.

Lorsque la vitre mobile a atteint la position souhaitée, on arrête le moteur 81, puis on bloque la poulie 83, et on actionne le moteur 81 dans le sens anti-horaire. La vitre mobile vient alors se plaquer contre la vitre fixe.

La fermeture est obtenue en débloquant la poulie 83, puis en actionnant le moteur 81 dans le sens anti-horaire.

### 3. remarques générales

Les différents modes de réalisation de l'invention décrits ci-dessus ne sont bien sûr pas limitatifs de l'invention. D'autres modes de réalisation, ainsi que des variantes et des perfectionnements, sont envisageables.

En particulier, bien qu'on ait décrit un décalage du panneau mobile vers l'intérieur du véhicule, il est également possible que celui-ci s'effectue vers l'extérieur.

Par ailleurs, bien qu'un seul panneau mobile soit représenté, il est bien sûr possible d'un prévoir plusieurs.

Enfin, on ne détaille pas les éléments complémentaires ou annexes (joint d'étanchéité, système de verrouillage, dispositif anti-effraction, prolongement des rails jusqu'aux bords du dispositif (cf. figure 1)...), qui pourront bien sûr être intégrés à la baie de l'invention.

## Revendications

1. Dispositif d'obturation d'une baie ménagée dans la carrosserie d'un véhicule automobile, comprenant un ensemble fixe (14) destiné à être rapporté sur ladite carrosserie et mobile (11) par rapport audit ensemble fixe, monté sur au moins un élément de support et/ou de guidage (12a,12b) solidaire de la face dudit ensemble fixe dirigée vers l'intérieur dudit véhicule, et pouvant venir obturer ou libérer une ouverture (13) ménagée dans ledit ensemble fixe,
**caractérisé en ce qu**'il comprend des moyens de motorisation uniques (32,81,94) agissant sur au moins un élément coulissant (261,262) le long d'un desdits éléments de support et/ou de guidage et présentant une articulation, de façon à assurer une cinématique dudit panneau mobile par rapport audit ensemble fixe décomposée en deux déplacements perpendiculaires :
- un déplacement (y) de verrouillage/déverrouillage, sensiblement perpendiculaire au plan formé par ledit ensemble fixe, et permettant le passage d'une position d'obturation dans le plan formé par ledit ensemble fixe à une position d'ouverture, dans un plan d'ouverture, sensiblement parallèle audit plan formé par ledit ensemble fixe, et réciproquement, ledit déplacement (y) de verrouillage/déverrouillage étant obtenu en agissant sur la ou lesdites articulations ;
- un déplacement (x) de coulissement dans ledit plan d'ouverture, obtenu en entraînant le ou lesdits éléments coulissants.

2. Dispositif d'obturation selon la revendication 1, **caractérisé en ce que** lesdits moyens de motorisation (32) agissent sur des moyens d'entraînement (31) assurant ledit déplacement de coulissement, jusqu'à une butée (41) interrompant ce coulissement, lors de l'obturation de ladite ouverture, lorsque ledit panneau fixe se trouve en regard de ladite ouverture,
l'énergie appliquée auxdits moyens d'entraînement (31) étant alors transférée à la ou auxdites articulations pour ramener ledit panneau mobile en position d'obturation.

3. Dispositif d'obturation selon l'une quelconque des revendications 1 et 2,
**caractérisé en ce que** ledit élément coulissant comprend un premier profilé (261) solidaire dudit panneau mobile et un second profilé (262) solidaire dudit rail (31), reliés au niveau de ladite articulation,
lesdits premier et second profilés étant sélectivement solidarisés ou désolidarisés en translation, de façon à interrompre le déplacement en translation dudit premier profilé, lors de l'obturation de ladite ouverture, lorsque le panneau mobile se trouve en regard de ladite ouverture, ledit second profilé continuant son déplacement en translation sur une portion supplémentaire dudit rail.

4. Dispositif d'obturation selon la revendication 3, **caractérisé en ce que** ladite portion supplémentaire dudit rail porte une came ou une rampe, entraînant une rotation (44) dudit second profilé (262) de façon à agir sur ladite articulation pour ramener ledit panneau mobile dans ladite position d'obturation.

5. Dispositif d'obturation selon l'une quelconque des revendications 3 et 4, **caractérisé en ce que** ledit premier profilé (261) est arrêté en translation à l'aide d'une butée (41) agissant sur ledit premier profilé et/ou sur ledit panneau mobile.

6. Dispositif d'obturation selon l'une quelconque des revendications 1 à 5, **caractérisé en ce que** ledit panneau mobile (11) se place dans ledit plan d'ouverture sous l'effet de son propre poids, lorsqu'il n'est pas maintenu en position d'obturation.

7. Dispositif d'obturation selon l'une quelconque des revendications 1 à 6, **caractérisé en ce que** lesdits moyens de motorisation uniques (32) transmettent un couple à ladite articulation lorsque ledit panneau (11) est en regard de ladite baie, pour ramener ledit panneau mobile dans ladite position d'obturation.

8. Dispositif d'obturation selon la revendication 7, **caractérisé en ce que** lesdits moyens de motorisation agissent sur un système vis sans fin (31) écrou, ledit écrou étant formé sur et/ou solidaire d'au moins un élément (262) solidaire dudit panneau mobile,
ledit déplacement de coulissement correspondant à un déplacement dudit écrou sur ladite vis (31), et ledit déplacement de verrouillage/déverrouillage correspondant à une position bloquée dudit écrou sur ladite vis.

9. Dispositif d'obturation selon l'une quelconque des revendications 1 à 8, **caractérisé en ce qu**'il comprend deux éléments de support et/ou de guidage (12a,12b), et en ce que lesdits moyens de motorisation agissent sur l'élément de support et/ou de guidage inférieur (12b), l'élément de support et/ou de guidage supérieur (12a) étant passif.

10. Dispositif d'obturation selon l'une quelconque des revendications 1 à 8, **caractérisé en ce qu**'il comprend un unique élément de support et/ou de guidage (62).

11. Dispositif d'obturation selon l'une quelconque des revendications 1 à 10, **caractérisé en ce que** ledit panneau mobile (52) présente au moins un bord et/ou un angle commun avec un bord et/ou un angle dudit dispositif d'obturation.

12. Dispositif d'obturation selon l'une quelconque des revendications 1 à 11, **caractérisé en ce qu**'il comprend des moyens (82,83) de maintien de façon stable dudit panneau mobile (11), dans une position d'ouverture prédéterminée.

13. Dispositif d'obturation selon la revendication 12, **caractérisé en ce que** lesdits moyens (82,83) de maintien plaquent ledit panneau mobile contre ledit ensemble fixe.

14. Dispositif d'obturation selon la revendication 13, **caractérisé en ce que** lesdits moyens (82,83) de maintien sont formés et/ou actionnés par lesdits moyens de motorisation.

15. Dispositif d'obturation selon la revendication 14, **caractérisé en ce que** lesdits moyens de maintien agissent de façon à interrompre le coulissement dudit panneau mobile et à inverser le sens de rotation desdits moyens (81) de motorisation.

16. Dispositif d'obturation selon l'une quelconque des revendications 12 à 15, **caractérisé en ce qu**'au moins une partie des bords de ladite partie mobile est équipée d'un joint (71), assurant l'étanchéité dans ladite position d'obturation et formant amortisseur dans ladite position d'ouverture prédéterminée.

17. Dispositif d'obturation selon l'une quelconque des revendications 1 à 16, **caractérisé en ce que** lesdits moyens (32,81,94) de motorisation agissent sur l'un des moyens de transmission appartenant au groupe comprenant :
- les crémaillères ;
- les câbles ;
- les vis sans fin (31);
- les tambours à rainure hélicoïdale.

18. Dispositif d'obturation selon la revendication 17, **caractérisé en ce que** ladite vis sans fin (31) est une vis souple.

19. Dispositif d'obturation selon l'une quelconque des revendications 1 à 18, **caractérisé en ce qu**e lesdits moyens (32,81,94) de motorisation uniques sont solidarisés audit ensemble fixe.

20. Dispositif d'obturation selon la revendication 18, **caractérisé en ce que** lesdits moyens (32,81,94) de motorisation sont montés dans et/ou sur un desdits éléments de support et/ou de guidage (12a,12b).

21. Dispositif d'obturation selon l'une quelconque des revendications 1 à 20, **caractérisé en ce que** ladite baie est ménagée dans un panneau vitré.

22. Véhicule automobile, comprenant au moins un dispositif d'obturation selon l'une quelconque des revendications 1 à 21.

## Claims

1. Device for obturating an aperture made in the bodywork of a motor vehicle, comprising a fixed assembly (14) intended to be mounted on the said bodywork and a panel (11) movable relative to the said fixed assembly, mounted on at least one supporting and/or guiding element (12a, 12b) joined to the face of the said fixed assembly directed towards the inside of the said vehicle, and being able to obturate or free an opening (13) made in the said fixed assembly,
**characterised in that** it comprises single motorisation means (32, 81, 94) acting on at least one element (261, 262) sliding along one of the said supporting and/or guiding elements and having an articulation, so as to ensure a movement of the said movable panel relative to the said fixed assembly which is broken down into two perpendicular displacements:
- a locking/unlocking displacement (y), substantially perpendicular to the plane formed by the said fixed assembly, and permitting the passage from an obturating position in the plane formed by the said fixed assembly to an open position, in an opening plane, substantially parallel to the said plane formed by the said fixed assembly, and vice versa, the said locking/unlocking displacement (y) being obtained by acting on the said articulation(s);
- a sliding displacement (x) in the said opening plane, obtained by driving the said sliding element(s).

2. Obturating device according to Claim 1, **characterised in that** the said motorisation means (32) act on drive means (31) ensuring the said sliding displacement as far as a stop (41) interrupting this sliding, during the obturation of the said opening, when the said fixed panel is situated opposite the said opening,
the energy applied to the said drive means (31) being then transferred to the said articulation(s) to bring the said movable panel back to the obturating position.

3. Obturating device according to either one of Claims 1 and 2, **characterised in that** the said sliding element comprises a first profile (261) joined to the said movable panel and a second profile (262) joined to the said rail (31), which profiles are connected at the said articulation,
the said first and second profiles being selectively joined or separated translationally, so as to interrupt the translational displacement of the said first profile, during the obturation of the said opening, when the movable panel is situated opposite the said opening, the said second profile continuing its translational displacement on a further portion of the said rail.

4. Obturating device according to Claim 3, **characterised in that** the said further portion of the said rail bears a cam or a ramp, causing a rotation (44) of the said second profile (262), so as to act on the said articulation to bring the said movable panel back into the said obturating position.

5. Obturating device according to either one of Claims 3 and 4, **characterised in that** the said first profile (261) is translationally stopped with the aid of a stop (41) acting on the said first profile and/or on the said movable panel.

6. Obturating device according to any one of Claims 1 to 5, **characterised in that** the said movable panel (11) moves into the said opening plane under the effect of its own weight, when it is not held in the obturating position.

7. Obturating device according to any one of Claims 1 to 6, **characterised in that** the said single motorisation means (32) transmit a torque to the said articulation when the said panel (11) is opposite the said aperture, to bring the said movable panel back into the said obturating position.

8. Obturating device according to Claim 7, **characterised in that** the said motorisation means act on an endless-screw (31)/nut system, the said nut being formed on and/or integral with at least one element (262) joined to the said movable panel,
the said sliding displacement corresponding to a displacement of the said nut on the said screw (31), and the said locking/unlocking displacement corresponding to a blocked position of the said nut on the said screw.

9. Obturating device according to any one of Claims 1 to 8, **characterised in that** it comprises two supporting and/or guiding elements (12a, 12b), and **in that** the said motorisation means act on the lower supporting and/or guiding element (12b), the upper supporting and/or guiding element (12a) being passive.

10. Obturating device according to any one of Claims 1 to 8, **characterised in that** it comprises a single supporting and/or guiding element (62).

11. Obturating device according to any one of Claims 1 to 10, **characterised in that** the said movable panel (52) has at least one edge and/or one angle in common with an edge and/or an angle of the said obturating device.

12. Obturating device according to any one of Claims 1 to 11, **characterised in that** it comprises means (82, 83) for stably holding the said movable panel (11) in a predetermined open position.

13. Obturating device according to Claim 12, **characterised in that** the said holding means (82, 83) press the said movable panel against the said fixed assembly.

14. Obturating device according to Claim 13, **characterised in that** the said holding means (82, 83) are formed and/or actuated by the said motorisation means.

15. Obturating device according to Claim 14, **characterised in that** the said holding means act so as to interrupt the sliding of the said movable panel and to reverse the direction of rotation of the said motorisation means (81).

16. Obturating device according to any one of Claims 12 to 15, **characterised in that** at least one part of the edges of the said movable part is equipped with a seal (71), ensuring tightness in the said obturating position and forming a damper in the said predetermined open position.

17. Obturating device according to any one of Claims 1 to 16, **characterised in that** the said motorisation means (32, 81, 94) act on one of the transmission means belonging to the group comprising:
- racks;
- cables;
- endless screws (31);
- drums with helical groove.

18. Obturating device according to Claim 17, **characterised in that** the said endless screw (31) is a flexible screw.

19. Obturating device according to any one of Claims 1 to 18, **characterised in that** the said single motorisation means (32, 81, 94) are joined to the said fixed assembly.

20. Obturating device according to Claim 18, **characterised in that** the said motorisation means (32, 81, 94) are mounted in and/or on one of the said supporting and/or guiding elements (12a, 12b).

21. Obturating device according to any one of Claims 1 to 20, **characterised in that** the said aperture is made in a glazed panel.

22. Motor vehicle, comprising at least one obturating device according to any one of Claims 1 to 21.

## Patentansprüche

1. Vorrichtung zum Verschließen einer Öffnung einer Fahrzeugkarosserie, die eine feste Gruppe (14) zum Aufsetzen auf die Karosserie sowie ein gegenüber der feststehenden Gruppe bewegliches Paneel (11) umfasst, wobei das Paneel auf mindestens einem Stütz- und/oder Führungselement (12a, 12b) angebracht ist, welches mit der zum Fahrzeuginneren gerichteten Fläche der festen Gruppe verbunden ist und somit in der Lage ist, eine Öffnung (13) in der feststehenden Gruppe zu verschließen oder freizugeben,
**dadurch gekennzeichnet, dass** sie über einmalige Motorisierungsmittel (32, 81, 94) verfügt, die auf mindestens ein Element (261, 262) wirken, welche(s) entlang einem der erwähnten Stütz- und/oder Führungselemente gleitet (gleiten) und ein Gelenk aufweist (aufweisen), um eine Kinematik des beweglichen Paneels im Verhältnis zur festen Gruppe sicherzustellen, wobei diese sich in zwei senkrecht zueinander laufende Bewegungen aufteilt:
- eine Verriegelungs-/Entriegelungsbewegung (y), die in etwa senkrecht zu der von der festen Gruppe gebildeten Ebene verläuft und den Übergang von einer Verschlussposition in der von der besagten festen Gruppe gebildeten Ebene in eine Öffnungsposition in einer Öffnungsebene ermöglicht, wobei diese Öffnungsebene in etwa parallel zu der von der feststehenden Gruppe gebildeten Ebene liegt und wobei im Gegenzug die Verriegelungs-/Entriegelungsbewegung (y) durch das Einwirken auf das die besagten Gelenke erzielt wird;
- eine Gleitbewegung (x) in der Öffnungsebene, die durch das Mitnehmen des (der) gleitenden Elementes (Elemente) erzielt wird.

2. Verschlussvorrichtung nach Anspruch 1,
**dadurch gekennzeichnet, dass** die erwähnten Motorisierungsmittel (32) auf Mittel zum Mitnehmen (31) wirken, welche die besagte Gleitbewegung sicherstellen, bis zu einem Anschlag (41), der diese Gleitbewegung beim Verschließen der besagten Öffnung unterbricht, wenn sich das feste Paneel gegenüber der Öffnung befindet,
wobei die auf die erwähnten Mitnahmemittel (31) angewendete Energie dann auf das die Gelenke transferiert wird, um das besagte bewegliche Paneel in die Verschlussposition zurückzuholen.

3. Verschlussvorrichtung nach einem der Ansprüche 1 oder 2,
**dadurch gekennzeichnet, dass** das gleitende Element ein erstes, mit dem beweglichen Paneel verbundenes Profil (261) und ein zweites, mit der Schiene (31) verbundenes Profil (262) umfasst, wobei diese Profile auf der Höhe des erwähnten Gelenkes miteinander verbunden sind,
wobei dieses erste und zweite Profil selektiv bei der Translation verbunden oder entkoppelt werden, um die Translationverschiebung des ersten Profils beim Verschließen der Öffnung zu unterbrechen, wenn sich das bewegliche Paneel gegenüber der Öffnung befindet und das zweite Profil seine Translationverschiebung über einen zusätzlichen Teil der besagten Schiene fortführt.

4. Verschlussvorrichtung nach Anspruch 3,
**dadurch gekennzeichnet, dass** das besagte zusätzliche Teil der Schiene eine Nocke oder Rampe trägt, welche eine Drehbewegung (44) des zweiten Profils (262) bewirkt, um auf das Gelenk einzuwirken und somit das bewegliche Paneel in die Verschlussposition zurückzuholen.

5. Verschlussvorrichtung nach einem der Ansprüche 3 oder 4,
**dadurch gekennzeichnet, dass** das erste Profil (261) bei seiner Translationverschiebung mit Hilfe eines Anschlags (41) angehalten wird, der auf dieses erste Profil und/oder auf das bewegliche Paneel wirkt.

6. Verschlussvorrichtung nach einem der Ansprüche 1 bis 5,
**dadurch gekennzeichnet, dass** das bewegliche Paneel (11) unter der Einwirkung des eigenen Gewichtes in die Öffnungsebene gelangt, wenn es nicht in der Verschlussposition gehalten wird.

7. Verschlussvorrichtung nach einem der Ansprüche 1 bis 6,
**dadurch gekennzeichnet, dass** die einmaligen Motorisierungsmittel (32) ein Drehmoment auf das Gelenk ausüben, wenn sich das Paneel (11) gegenüber der Fensteröffnung befindet, um das bewegliche Paneel in die Verschlussposition zurückzuholen.

8. Verschlussvorrichtung nach Anspruch 7,
**dadurch gekennzeichnet, dass** die Motorisierungsmittel auf ein endloses Schraubensystem (31) auf eine Mutter einwirken, wobei die Mutter auf mindestens ein mit dem beweglichen Paneel verbundenes Element (262) ausgebildet ist und/oder damit verbunden ist,
wobei die Gleitbewegung einer Bewegung der besagten Mutter auf der Schraube (31) entspricht und die Verriegelungs-/Entriegelungsbewegung einer blockierten Position besagter Mutter auf besagter Schraube entspricht.

9. Verschlussvorrichtung nach einem der Ansprüche 1 bis 8,
**dadurch gekennzeichnet, dass** sie zwei Stütz- und/oder Lenkungselemente (12a, 12b) umfasst und, dass die Motorisierungsmittel auf das untere Stütz- und/oder Führungselement (12b) wirken, wobei das obere Stütz- und/oder Führungselement (12a) passiv ist.

10. Verschlussvorrichtung nach einem der Ansprüche 1 bis 8,
**dadurch gekennzeichnet, dass** sie ein einziges Stütz- und/oder Führungselement (62) aufweist.

11. Verschlussvorrichtung nach einem der Ansprüche 1 bis 10,
**dadurch gekennzeichnet, dass** das bewegliche Paneel (52) mindestens einen gemeinsamen Rand und/oder Winkel mit einem Rand und/oder Winkel der besagten Verschlussvorrichtung aufweist.

12. Verschlussvorrichtung nach einem der Ansprüche 1 bis 11,
**dadurch gekennzeichnet, dass** sie über Mittel (82, 83) zum stabilen Halten des beweglichen Paneels (11) in einer vorgegebenen Öffnungsposition verfügt.

13. Verschlussvorrichtung nach Anspruch 12,
**dadurch gekennzeichnet, dass** die Mittel zum Halten (82, 83) das bewegliche Paneel gegen die feste Gruppe drücken.

14. Verschlussvorrichtung nach Anspruch 13,
**dadurch gekennzeichnet, dass** die Mittel zum Halten (82, 83) von den Motorisierungsmitteln gebildet und/oder betätigt werden.

15. Verschlussvorrichtung nach Anspruch 14,
**dadurch gekennzeichnet, dass** die Mittel zum Halten so wirken, dass sie die Gleitbewegung des beweglichen Paneels unterbrechen und die Umdrehungsrichtung der besagten Motorisierungsmittel (81) umkehren.

16. Verschlussvorrichtung nach einem der Ansprüche 12 bis 15,
**dadurch gekennzeichnet, dass** mindestens ein Teil der Ränder des beweglichen Teils eine Dichtung (71) aufweist, welche die Dichtheit in der Verschlussposition sicherstellt und einen Stoßdämpfer in der vorgegebenen Öffnungsposition bildet.

17. Verschlussvorrichtung nach einem der Ansprüche 1 bis 16,
**dadurch gekennzeichnet, dass** die Motorisierungsmittel (32, 81, 94) auf eines der Übertragungsmittel aus der folgenden Gruppe wirken:
- Zahnstangen,
- Seile,
- Endlosschrauben (31),
- Walzen mit Spiralnut.

18. Verschlussvorrichtung nach Anspruch 17,
**dadurch gekennzeichnet, dass** die besagte Endlosschraube (31) biegsam ist.

19. Verschlussvorrichtung nach einem der Ansprüche 1 bis 18,
**dadurch gekennzeichnet, dass** die einmaligen Motorisierungsmittel (32, 81, 94) mit der festen Gruppe verbunden sind.

20. Verschlussvorrichtung nach Anspruch 18,
**dadurch gekennzeichnet, dass** die Motorisierungsmittel (32, 81, 94) in und/oder auf einem der besagten Stütz- und/oder Führungselemente (12a, 12b) angebracht sind.

21. Verschlussvorrichtung nach einem der Ansprüche 1 bis 20,
**dadurch gekennzeichnet, dass** die Öffnung sich in einer Glasscheibe befindet.

22. Kraftfahrzeug, das mindestens eine Verschlussvorrichtung nach einem der Ansprüche 1 bis 21 aufweist.
